# EUROPÄISCHE PATENTSCHRIFT

(11) **EP 3 823 902 B1**
(45) Veröffentlichungstag und Bekanntmachung des Hinweises auf die Patenterteilung: **08.11.2023**
(21) Anmeldenummer: 19773404.9
(22) Anmeldetag: 19.09.2019
(51) Int. Cl.: B65D 1/09, B29C 49/28, B29C 49/54, B29C 49/62

(54) **BEHÄLTER**
CONTAINER
CONTENANT

(30) Priorität: 08.10.2018 DE 102018007991
(43) Veröffentlichungstag der Anmeldung: 26.05.2021
(73) Patentinhaber: kocher-plastik Maschinenbau GmbH, 74429 Sulzbach-Laufen (DE)
(72) Erfinder: HAMMER, Alexander, 74405 Gaildorf (DE); BOJBIC, Daniel, 74429 Sulzbach-Laufen (DE); KENGETER, Oliver, 74426 Bühlerzell-Geifertshofen (DE)
(74) Vertreter: Bartels und Partner, Patentanwälte
(86) Internationale Anmeldenummer: PCT/EP2019/075172
(87) Internationale Veröffentlichungsnummer: WO 2020/074234

(56) Entgegenhaltungen:
- EP-A1- 1 616 549
- CN-Y- 201 271 373
- US-A- 3 460 724
- US-A- 4 512 475

## Beschreibung

Die Erfindung betrifft einen Behälter mit den Merkmalen des Anspruchs 1.

Durch EP 2 269 558 B1 ist eine Kunststoffampulle als Behälter bekannt, unter anderem mit:
einem Körperabschnitt;
einem Mundabschnitt, welcher einen oberen Teil des Körperabschnitts ausgestaltet;
einem Kopfabschnitt, welcher über einen abgeschnittenen Abschnitt kontinuierlich mit dem Mundabschnitt ausgebildet ist; und
einem Knopfabschnitt, der kontinuierlich mit dem Kopfabschnitt ausgebildet ist, wobei die Kunststoffampulle durch Verdrehen des Knopfabschnitts und Abschneiden des Kopfabschnitts von dem Mundabschnitt geöffnet wird,
wobei der obere Teil des Mundabschnitts einen Durchmesser aufweist, der stärker als jener des Mundabschnitts verringert ist, um einen Schulterabschnitt auszubilden,
wobei das obere Ende des Schulterabschnitts über einen abgeschnittenen Abschnitt zu dem unteren Ende des Kopfabschnitts verläuft,
wobei der Kopfabschnitt ausgebildet ist, eine im Wesentlichen halbkugelförmige Schalenform auszubilden, welche vom oberen Teil zum unteren Teil langsam gekrümmt ist.

Ferner soll bei der bekannten Lösung der Teil des Kopfabschnittes der kontinuierlich mit dem abgeschnittenen Abschnitt ausgebildet ist, eine Wanddicke aufweisen, die 1,2- bis 1,8-mal dicker ist als die Wanddicke des abgeschnittenen Abschnitts.

Diese eingeforderten großen Wanddickenunterschiede können unter Produktionsbedingungen mit hoher Wahrscheinlichkeit zu lokalen Undichtigkeiten im Bereich der Trennstelle führen, was für Injektionspräparate unweigerlich zum Verlust der Sterilität und zu einer kritischen mikrobiellen Kontamination des Behälterinhalts führen kann.

Auch kann nach dem Öffnen entlang der Trennstelle eine scharfkantige Trenn- oder Bruchfläche entstehen, so dass bei einer Verwendung der bekannten Lösung für einen Hautauftrag (Kosmetika, topische Arzneimittel etc.), bei Schleimhautkontakt (Trinkampulle mit Stärkungs- oder Arzneimittel, rektale Applikation) oder bei Anwendungen an Ohr oder Auge dies leicht zu Verletzungen führen kann. Auch lässt sich das zuverlässige Abdichten einer Spritze zur Entnahme der Injektionslösung aus dieser Ampulle aufgrund der wenig exakt reproduzierbaren Trenn- oder Bruchfläche nur schwierig sicherstellen.

Die bekannte Ampulle besteht aus Polyethylen (PE) als eingesetztem Kunststoffmaterial und ist bevorzugt mit Wasser befüllt. Solche Ampullen zeichnen aber sich gerade durch materialklassentypische hohe Sauerstoffdurchlässigkeiten aus, die deren Verwendung beispielsweise für die Aufnahme und Abgabe empfindlicher Vitaminpräparate deutlich einschränkt. Als teilkristallines Polymer ist PE wie auch Polypropylen (PP) nicht hochtransparent, sondern lediglich transluzent, was eine Inspektion des Ampulleninhalts von außen her erschwert. Demgegenüber sind Ampullen mit verbesserten Barriere-Eigenschaften, beispielsweise aus EP 1 616 549 B1 bekannt, was sich durch einen mehrschichtigen Aufbau der Ampulle erreichen lässt.

Lageabhängig, insbesondere bei der üblichen liegenden Lagerung von Ampullen in Kartonverpackungen, kann über den Übergangsbereich entlang der Trennstelle zwischen Ampullenkörper und Kopfabschnitt des Kopfteils in dessen halbschalenförmig ausgebildeten Hohlabschnitt Flüssigkeit eintreten. Je nach Eigenschaften der Flüssigkeit, insbesondere deren Oberflächenspannung, fließt diese nicht ohne weiteres in den Ampullenkörper zurück. Um diese meist einen Wirkstoff enthaltende Fluidmenge wieder in das Behälterinnere zurückführen zu können, ist vor Öffnen der Ampulle und mithin vor Abtrennen des Kopfteils ein niederfrequentes Vibrieren oder "Klopfen" des Behältererzeugnisses angeraten. Nur so kann eine korrekte Dosierung sichergestellt werden. Ein derartiges Vibrieren kann jedoch auch zu einer unerwünschten Schaumbildung in der Ampulle führen, was wiederum eine vollständige Flüssigkeitsentnahme und damit eine korrekte Dosierung erschwert.

Um den vorstehend genannten Problemen entgegenzutreten, ist bei einem Behälter, insbesondere bei einer hermetisch verschlossenen Ampulle nach der DE 10 2007 009 457 A1, bereits vorgeschlagen worden, das kopfseitige Verschlussteil als eigentlichen Verschlusskörper mit einer Art Schließkugel zu versehen, die eine innere kugelförmige Hohlkammer ausbildet, die in die freigegebene Abgabeöffnung des Behälters mündet. Diese Behälter sind aus einem formbaren Kunststoffmaterial hergestellt, beispielsweise aus Polyamid (PA), PE oder PP. Dank der Kugelform ist sichergestellt, dass das hier eingesetzte Kunststoffmaterial im Formwerkzeug über eine Art Kante gezogen werden kann, um dergestalt das Kunststoffmaterial zur Bildung der Trennstelle zu reduzieren, um dergestalt den Öffnungsvorgang für einen Anwender zu erleichtern. Des Weiteren erlaubt die Kugelform eine verbesserte Rückgabe von ungewollt aufgenommenem Fluid in das Innere des Behälterkörpers zurück, und die kugelförmige Hohlkammer stellt sicher, dass beim Abtrennen des Kopfteils vom Behälterkörper über die Trennstelle die Abgabeöffnung mit im Wesentlichen kreisförmigem Abgabequerschnitt in dieser Form auch geöffnet bleibt. Auch sind dergestalt eventuell Verletzungen generierende scharfe Übergangsstellen an der Trenn- oder Bruchfläche zum Behälterkörper vermieden. Die Beschränkung auf die oben genannten Materialien ist einerseits vorteilhaft, da es bei diesen recht weichen Werkstoffen nur selten zu eventuell Verletzungen generierenden scharfen Übergangsstellen an der Trenn- oder Bruchfläche zum Behälterkörper kommt; anderseits jedoch nachteilig, da sie - wie bereits ausgeführt - lediglich transluzent, jedoch nicht transparent sind, was die visuelle Inspektion auf eventuelle Ausfällungen, Trübungen oder partikuläre Verunreinigungen deutlich erschwert. Hierfür wären amorphe Behältermaterialien zu verwenden, wie beispielsweise aromatische Polyestermaterialien (PET, PETG, PEF) oder amorphe Polyolefine wie Cycloolefinpolymere (COP) oder -copolymere (COC). Deren mechanische Eigenschaften wie Sprödigkeit oder Elastizitätsmodul führen jedoch dazu, dass die in DE 10 2007 009 457 A1 genannten Maßnahmen nicht ausreichen, die Ampulle leicht und ohne scharfe Kanten öffnen zu können.

Die CN 201 271 373 Y beschreibt einen Behälter, insbesondere in Ampullenform, mit den Merkmalen des Oberbegriffs des Anspruchs 1 sowie ganz oder überwiegend aus einem oder mehreren Kunststoffmaterialien bestehend, mit einem Behälterkörper zur Aufnahme eines Füllguts, das über eine freigebbare Behältermündung nach Entfernen eines Verschlussteils entnehmbar ist, das entlang einer Trennstelle mit dem Halsteil des Behälterkörpers in einer ungeöffneten Stellung lösbar verbunden ist, wobei sich in der ungeöffneten Stellung an die Trennstelle eine konisch verlaufende Wand vom Halsteil am Behälterkörper und eine konisch verlaufende Wand vom Verschlussteil anschließen, und diese Wände zumindest einen Teil eines Ringraumes begrenzen, der an seinem einen Ende in die Umgebung und an seinem anderen Ende in die Trennstelle ausmündet.

Weitere Behälter geht aus der US 4 512 475 und der US 3 460 724 hervor. Ausgehend von diesem Stand der Technik liegt der erfindungsgemäßen Behälter- respektive Ampullen-Lösung die Aufgabe zugrunde, den genannten Stand der Technik weiter zu verbessern, insbesondere dahingehend, dass sich das Erzeugnis leicht öffnen lässt, dass die Verletzungsgefahr reduziert ist, sich der Behälter- oder Ampulleninhalt vollständig entnehmen lässt und die Herstellung, insbesondere im Rahmen eines Blasform-, Füll- und Schließverfahrens und unter Verwendung der oben genannten amorphen Polymeren, vereinfacht ist.

Eine dahingehende Aufgabe löst ein Behälter mit den Merkmalen des Patentanspruches 1 in seiner Gesamtheit.

Erfindungsgemäß ist nach dem kennzeichnenden Teil des Patentanspruches 1 vorgesehen, dass die konische Wand vom Halsteil und die Wand vom Verschlussteil ineinandergestellt den Ringraum begrenzen.

Es ist ferner vorgesehen, dass sich in der ungeöffneten Stellung an die Trennstelle verlaufende Wände von Behälterkörper und Verschlussteil anschließen, die einen Ringraum begrenzen, der an seinem einen Ende in die Umgebung und an seinem anderen Ende in die Trennstelle ausmündet. Dergestalt ist eine Art Hinterschneidung im Behältermaterial erreicht im Sinne einer Vertiefung oder Aussparung, die eine Entformung des Kunststoffformteiles aus einer Herstellform behindert, ja eigentlich unmöglich macht, weil sie quer zur Entformungsrichtung ausgeprägt ist. Überraschenderweise gelingt es im vorliegenden Fall auch bei den oben genannten bevorzugten amorphen Polymeren eine Art Zwangsentformung durchzuführen, ohne dass es zu Undichtigkeiten am Behälter und insbesondere an der Trennstelle kommt. Überdies ergibt sich für einen Durchschnittsfachmann auf diesem Gebiet in überraschender Weise der Vorteil, dass nach dem Öffnen eine freigegebene Behältermündung ohne scharfe Kanten vorliegt, die ansonsten gegebenenfalls eine Verletzungsgefahr für den Anwender mit sich bringen könnten. Auch ergibt sich keine Bildung von Kunststoff-Fäden über die Trennstelle hinweg.

Es hat sich gezeigt, dass bei der erfindungsgemäßen Lösung selbst bei Verwendung oben genannter amorpher Polyolefine oder aromatische Polyester als Kunststoffmaterialien für die Herstellung sich in vorteilhafter Weise eine eng begrenzte sehr hohe Verstreckung bei der Bildung der Hinterschneidung realisieren lässt, die zu den an sich gewünschten geringen Öffnungsdrehmomenten mit beiträgt, so dass der erfindungsgemäße Behälter respektive die Ampulle sich mit geringen Betätigungskräften öffnen lässt. So lassen sich mit der erfindungsgemäßen Lösung Öffnungsdrehmomente erreichen, die erheblich niedriger liegen als bei bekannten Behältern aus dem gleichen Material.

Aufgrund der angesprochenen Hinterschneidung lässt sich konstruktiv im Verschlussteil ein dreidimensionaler Hohlkörper mit zur Trennstelle hin geneigten Bahnwänden erreichen, was den Rückfluss von Fluid aus dem Hohlkörper im Kopfteil des Behälterkörpers in Richtung des Behälterinneren deutlich erleichtert, insbesondere einen nahezu vollständigen Rückfluss ermöglicht, ohne dass die vorgenannten Klopfbewegungen notwendig sind.

Konische Wände von Behälterkörper und Verschlussteil begrenzen in der Art von Kegelstümpfen ausgebildet und ineinandergestellt den Ringraum, der sich in Richtung der Trennstelle verjüngt. Aufgrund der dahingehenden Ausgestaltung ist die Trennstelle durch den angrenzenden Ringraum mit definiert und randseitig ausgesteift, so dass sich mit geringen Betätigungskräften das Verschlussteil vom Behälterkörper für eine Frei- und Abgabe des Behälterinhaltes trennen lässt.

In weiter vorteilhafter Weise ist vorgesehen, dass der konisch verlaufende Ringraum sich in Richtung des Behälterkörpers oder in Richtung des Verschlussteils orientiert. Unabhängig von der dahingehenden Orientierung ist der Mündungs- oder Abgabebereich des Behälterkörpers mit konisch verlaufenden Begrenzungswänden umrandet, die in jedem Fall sicherstellen, dass aus dem Hohlkörper im Kopf- oder Verschlussteil des Behälterkörpers etwaig vorhandenes Fluid in das Innere des Behälterkörpers zurückströmen kann, und zwar ohne dass Klopfvorgänge, die zum Aufschäumen des Behälterinhalts führen können, notwendig sind.

Bei einer weiteren besonders bevorzugten Ausführungsform des erfindungsgemäßen Behälters ist vorgesehen, dass der Behälterkörper ein Halsteil aufweist, das die freigebbare Behältermündung umfasst, und das mit dem Verschlussteil zusammen die Trennstelle bildet. Dabei ist vorzugsweise die Trennstelle aus einem geschwächten Wandteilbereich zwischen Halsteil- und Verschlussteil gebildet und das kappenartige Verschlussteil ist mittels einer Handhabe vom Halsteil entlang der Trennstelle unter Bildung eines sogenannten Twist off-Verschlusses abdrehbar. Durch die Schaffung eines im Durchmesser regelmäßig gegenüber dem Behälterkörper reduzierten Halsteils ist eine gezielte Abgabe des Fluids aus dem Behälterkörper erreicht. Bei der dahingehenden Ausgestaltung ist es auch möglich, im Rahmen der Gestaltung des Verschlussteils, durch dessen Vergrößerung zu einem vergrößerten Knebel als der Handhabe zu gelangen, der mit dazu beiträgt die Betätigungskräfte beim Abdrehen des Verschlussteiles vom Behälterkörper über dessen Halsteil zu verringern.

Bei einer weiteren besonders bevorzugten Ausführungsform des erfindungsgemäßen Behälters ist vorgesehen, dass das Halsteil unter Bildung einer Mündungsebene über die freigebbare Behältermündung in Richtung des Verschlussteils in der ungeöffneten Stellung vorsteht, und dass die in der geöffneten Stellung freigegebene Behältermündung entlang der Trennstelle in einer Trennebene verläuft, die gegenüber der Mündungsebene in Richtung des Behälterkörpers zurückversetzt angeordnet ist. Selbst, wenn nun die beim Öffnen an der Trennstelle entstehende Bruchfläche je nach Materialauswahl doch rau oder scharfkantig sein sollte, erweist sich dies für die Anwendung des Behälters als nicht nachteilig, da durch eine räumliche Versetzung von Trenn- zu Mündungsebene, beispielsweise bei direktem Auftragen des Ampulleninhalts auf die Haut, oder wenn solche Ampullen in den Mund genommen werden, nicht die Trennebene in direkten Kontakt mit der Haut kommt, sondern vielmehr die Mündungsebene, die eine glatte und vorzugsweise gerundete Anlagefläche ausbildet.

Es sind aber auch Ausführungsformen von Behältern möglich, bei denen die Mündungsebene und die Trennebene miteinander zusammenfallen. In jedem Fall ist es vorteilhaft, dass der freigegebene Rand des Halsteils in der geöffneten Stellung einwärtsgebogen ist und die Behälteröffnung dergestalt begrenzt, um dergestalt eine ergonomisch vorteilhafte Applikation des Behälterinhalts beim Anwender zu ermöglichen.

Als besonders vorteilhaft hat es sich erwiesen, den Behälter als Trinkampulle, vorzugsweise als Behälter für sauerstoffempfindliche Stärkungsmittel, zu konzipieren, wobei als Material bevorzugt ein Kunststoff verwendet wird, der Polyethylenterephthalat (PET), oder Poly(ethylen-2,5-furandicarboxylat) (PEF) oder glykolmodifiziertes Polyethylenterephthalat (PETG) enthält, da diese transparenten Materialien im Vergleich zu Polyethylen (PE) oder Polypropylen (PP) wesentlich höhere Sauerstoffbarrieren aufweisen. Vorteilhafterweise kommen PET und insbesondere PEF zum Einsatz, wenn die Stärkungsmittel flüchtige Geschmacksstoffe wie Limonen enthalten. PEF weist eine gegenüber PET höhere Barrierewirkung und eine geringere Spannungsrissempfindlichkeit auf.

Überdies hat es sich als besonders vorteilhaft erwiesen, den Behälter für parenteral zu applizierende Arzneimittel und Medizinprodukte zu verwenden, wobei als Material bevorzugt amorphes Polyolefin verwendet wird, der Cycloolefinpolymere (COP) oder -copolymere (COC) enthält. Diese transparenten Materialien zeichnen sich durch geringe Absorptionsneigung der typischerweise in parenteralen Produkten verwendeten Konservierungsmittel wie Benzalkoniumchlorid, Metacresol, oder Phenol aus.

Die Erfindung betrifft auch eine Vorrichtung zum Herstellen eines vorstehend genannten Behälters, die dadurch charakterisiert ist, dass zumindest zwei gegeneinander bewegbare Formhälften vorgesehen sind, die den konisch verlaufenden Ringraum erzeugen und deren Formteile aus dem Ringraum zwecks Freigabe des Behälters aus der Form zwangsentfernt werden.

Die Erfindung betrifft des Weiteren ein Verfahren zum Herstellen eines Behälters unter Verwendung der vorstehend genannten Vorrichtung, wobei ein Blasform-, Füll- und Schließverfahren (bottelpack^{®}) zum Einsatz kommt, wobei das dahingehende Verfahren modifiziert sein kann, indem man den eigentlichen Blasformvorgang entfallen lässt und die Behälterkontur durch Anlegen von Unterdruck an die Herstellform ausschließlich erzeugt, hierdurch steht nur eine Druckdifferenz von maximal einem bar zur Formung des Behälters zur Verfügung, was sich jedoch erfindungsgemäß auch für die oben genannten amorphen Polymeren als ausreichend herausgestellt hat. Dies ist auch für einen Durchschnittsfachmann auf diesem Gebiet überraschend, werden doch Behälter aus PET, PEF oder PETG mit weit höheren Blasdrücken gefertigt.

Nachfolgend ist die Erfindung anhand von in den Figuren dargestellten Ausführungsbeispielen näher erläutert. Dabei zeigen in prinzipieller und nicht maßstäblicher Darstellung die:
- Fig. 1: eine Draufsicht auf einen erfindungsgemäßen Behälter;
- Fig. 2a, 3: eine gegenüber der Fig. 1 vergrößerte Darstellung eines oberen Behälterabschnitts vor und nach Abtrennen eines Verschlussteils;
- Fig. 2b: ein gegenüber den Fig. 1 und 2a geändertes Ausführungsbeispiel vor dem Abtrennen eines Verschlussteils;
- Fig. 4 und 5: ein gegenüber den Fig. 1 bis 3 geändertes Ausführungsbeispiel betreffend einen oberen Behälterabschnitt einmal mit und einmal ohne Verschlussteil; und
- Fig. 6: einen Teil einer Formvorrichtung zum Herstellen eines Kopfteiles eines Behälters nach den Fig. 1 und 2.

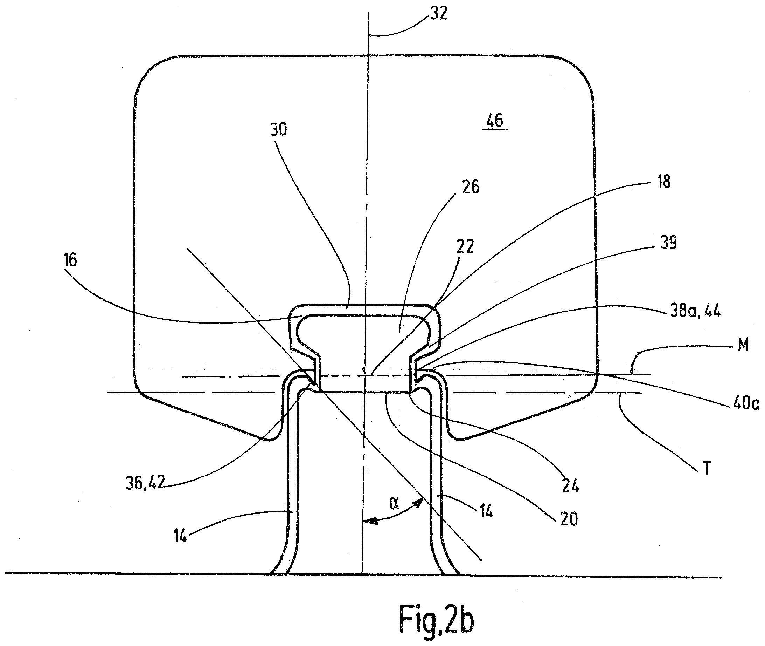

Die Ausführungsform der Fig. 2b dient lediglich der Erläuterung des Hintergrundes der Erfindung und ist nicht Gegenstand eines Anspruches.

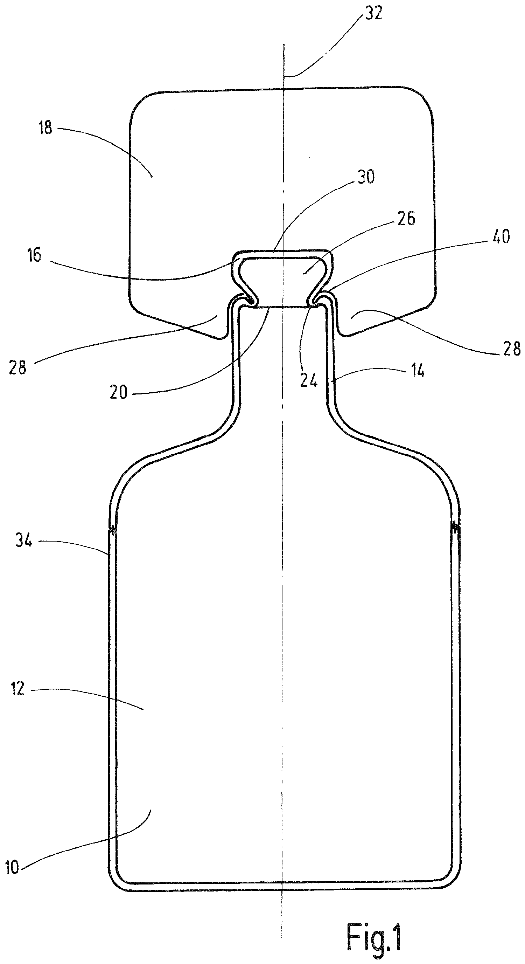

Der in Fig. 1 dargestellte erfindungsgemäße Behälter ist insbesondere in Form einer befüllten, hermetisch verschlossenen und vor deren Öffnung einstückigen Ampulle ausgebildet. Der gezeigte Behälter weist einen hohlen Behälter- oder Aufnahmekörper 10 auf, der zur Aufnahme eines nicht näher dargestellten Abgabemediums oder Füllgutes 12 dient, unter anderem in Form von Flüssigkeiten, Suspensionen, Gelen für medizinische, kosmetische Zwecke oder als Nahrungsergänzungsmittel/Stärkungsmittel. Der Inhalt der Ampulle lässt sich insbesondere oral oder auf der Haut applizieren. Auch kann der Inhalt des Behälters respektive der Ampulle ein Arzneimittel oder Medizinprodukt zur inhalativen Behandlung der Atemwege, insbesondere von Asthma oder COPD sein. Ferner kann der Inhalt der Ampulle für ophthalmologische Zwecke dienen.

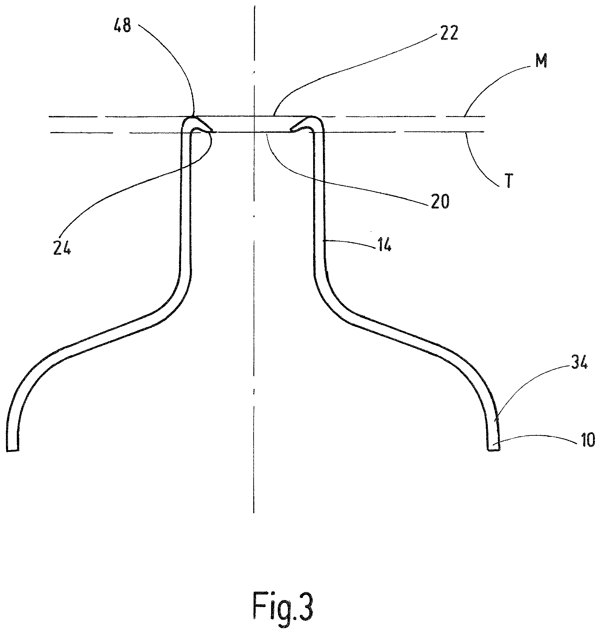

Der ampullenförmige Behälter weist zur Aufnahme des jeweiligen Füllgutes 12 den hohlzylindrisch ausgebildeten Behälterkörper 10 auf, der in Blickrichtung auf die Fig. 1 nach oben hin gesehen in ein zylindrisches Halsteil 14 übergeht, an das sich ein ein Kopfteil 16 bildendes Verschlussteil 18 anschließt, das über eine als Sollbruchstelle dienende umlaufende Trennstelle 20 mit dem Halsteil 14 und insoweit mit dem Behälterkörper 10 im Bereich einer freigebbaren Behältermündung 22 (Fig. 3) lösbar verbunden ist. An der Trennstelle 20 weist der Behälter eine reduzierte Wandstärke auf. Die Trennstelle 20 ist derart ausgebildet, dass das Verschlussteil 18 in der Art einer Handhabe in Form eines Knebelverschlusses von dem Halsteil 14 und mithin von dem Behälterkörper 10 abdrehbar ist (Twist off-Verschluss), um derart die Behältermündung 22 (Fig. 3) für einen Entnahmevorgang aus dem Behälterinneren freizugeben.

Das Verschlussteil 18 weist in seinem Kopfteil 16 eine Hohlkammer 26 auf, die mit dem Inneren des Behälterkörpers 10 medien- oder fluidführend verbunden ist. Das flächig ausgebildete Verschlussteil 18 ragt in Blickrichtung auf die Fig. 1 gesehen, mit zwei fahnenartigen Überständen 28 randseitig über das Halsteil 14 nach unten vor und schützt dergestalt die Trennstelle 20. Ansonsten umfasst das Verschlussteil 18 die Hohlkammer 26 die schalenartig ausgebildet an ihrer oberen freien Stirnseite eine im Wesentlichen eben verlaufende Abschlusswand 30 aufweist, die kreisförmig ausgebildet quer zur Längsachse 32 des Behälters verlaufend angeordnet ist.

Der in Fig. 1 gezeigte Behälter lässt sich mit einem üblichen Blasform-, Füll- und Schließverfahren (BFS-Verfahren) herstellen, das auch unter der Markenbezeichnung bottelpack^{®} der Fachwelt bekannt geworden ist. Der Behälter respektive die Ampulle besitzt ein Volumen von weniger als 50 ml, bevorzugt von weniger als 30 ml, besonders bevorzugt von weniger als 20 ml. In der gezeigten Ausführungsform ist die Ampulle nach ihrer Öffnung nicht wieder verschließbar ausgestaltet und ansonsten als vor der Entfernung des Verschlussteils 18 einstückiger Behälter konzipiert. Die Wandung 34 des Behälters lässt sich einschichtig, aber auch mehrschichtig, insbesondere zweischichtig ausgestalten.

Geeignete Materialien zum Herstellen des Behälters sind die üblicherweise für das BFS-Verfahren verwendeten Polyolefine wie Polyethylen niedriger Dichte (LDPE; beispielsweise Purell 3020 D der Firma LyondellBasell), Polyethylen höherer Dichte (HDPE, beispielsweise Purell PE GF 4760 der Firma LyondellBasell) sowie Polypropylen (PP, beispielsweise Purell RP 270G der Firma LyondellBasell).

Besonders vorteilhaft werden jedoch für den erfindungsgemäßen Behälter amorphe Polymere insbesondere aromatische Polyester wie PEN (Polyethylennaphtylat), PBT (Polybutenterephthalat), bevorzugt jedoch PET (Polyethylenterephthalat) oder dessen Copolyester wie PETG, besonders bevorzugt jedoch PEF (Poly(ethylen-2,5-furandicarboxylat)) sowie PEF-Copolymere und PEF enthaltende Blends, eingesetzt.

In gleicher Weise sind amorphe Polyolefine, insbesondere cycloolefinhaltige Polymere wie beispielsweise Cycloolefinpolymere COP (Zeonex der Firma Zeon, Japan) oder Cycloolefincopolymere COC (Topas der Firma Topas, Frankfurt) sowie deren Blends mit anderen Polyolefinen, insbesondere LLDPE (linear low density Polyethylen) verwendbar.

Aus den vorgenannten amorphen Polymeren lassen sich erst durch die Verwendung der erfindungsgemäßen Ampullenform Erzeugnisse herstellen, die sich vom Anwender mühelos und ohne Erzeugen scharfer Kanten öffnen lassen. Im Vergleich zu Ampullen im Stand der Technik reduziert die erfindungsgemäße Behälterlösung das mittlere Öffnungsdrehmoment erheblich, was im Folgenden noch näher erläutert werden wird.

Auch hat es sich als vorteilhaft erwiesen, die Ampulle aus einem Material herzustellen, das ein Cycloolefinpolymer und/oder ein Cycloolefincopolymer mit einer Glasübergangstemperatur von weniger als 150 °C, bevorzugt von weniger als 100 °C, und/oder deren Blends enthält.

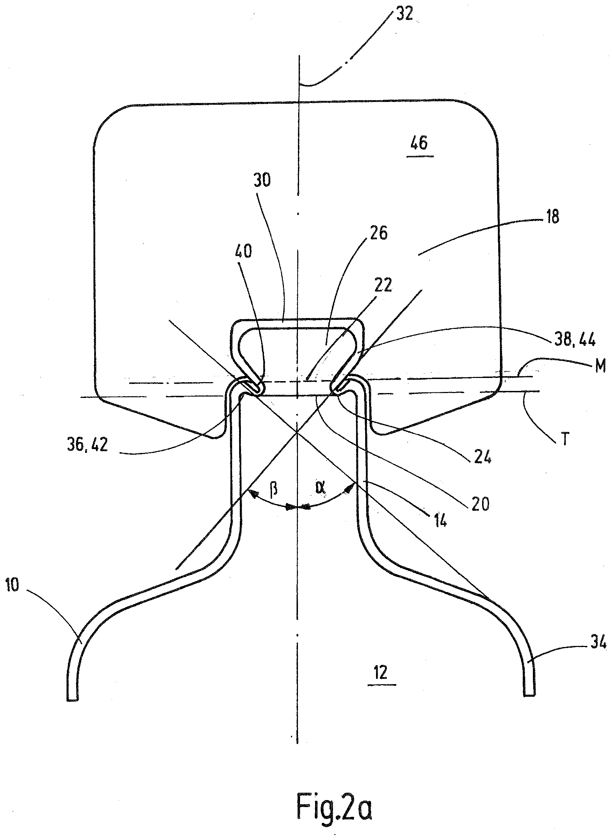

Wie insbesondere die Fig. 2a in vergrößerter Darstellung zeigt, schließen sich in der ungeöffneten Stellung des Behälters an die Trennstelle 20 zwei konisch verlaufende Wände 36, 38 an, wobei die Wand 36 vom Halsteil 14 und die Wand 38 vom Verschlussteil 18 ausgeht. Ausgehend von der Trennstelle 20, begrenzen diese einen Ringraum 40, der an seinem einen freien Ende in die Umgebung ausmündet. Das genannte Ausmünden in die Umgebung ist optional an zwei gegenüberliegenden Seiten von dem Übergriff des Verschlussteils 18 mit seinen beiden Überständen 28 unterbrochen. Die konischen Wände 36 bzw. 38 von Halsteil 14 bzw. Verschlussteil 18 sind jeweils in Form geschlossener Ringkörper und insbesondere in der Art von Kegelstümpfen 42 bzw. 44 ausgebildet, die ineinander gestellt den Ringraum 40 begrenzen, der sich in Richtung der Trennstelle 20 in der Art eines Halbbogens verjüngt. So bildet die konische Wand 36 den einen ringförmigen Kegelstumpf 42 aus und die konische Wand 38 den anderen ringförmigen Kegelstumpf 44, der in den außenliegenden Kegelstumpf 42, wie zeichnerisch dargestellt, bis zum Erreichen der Trennstelle 20 eingestellt ist.

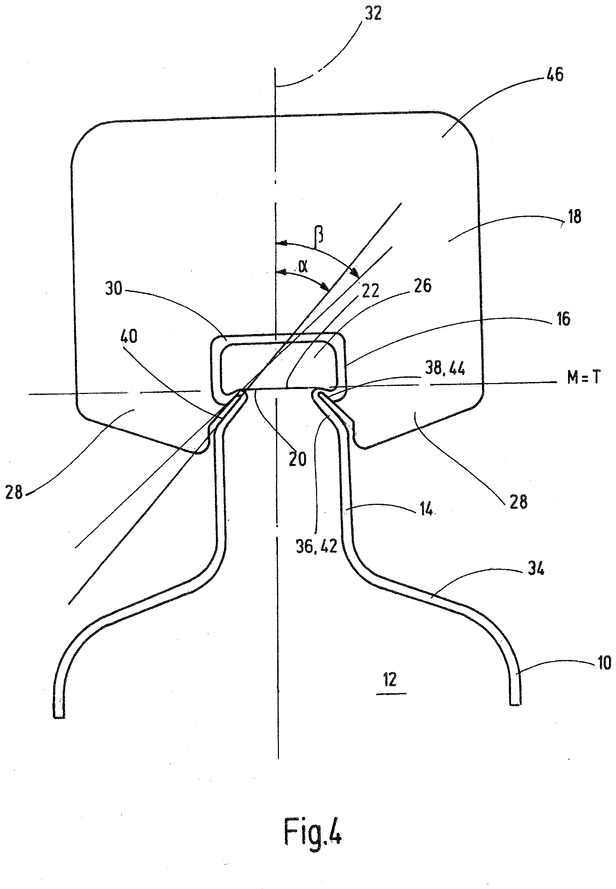

Wie die Fig. 1 und 2a zeigen, kann der konisch verlaufende Ringraum 40 sich in Richtung des Behälterkörpers 10 oder, wie Fig. 4 zeigt, in Richtung des Verschlussteils 18 orientieren. Insbesondere zeigen die genannten Figuren, dass in fiktiven Verlängerungen der Wände 36 bzw. 38 diese mit der Längsachse 32 des Behälters einen Winkel α bzw. β einschließen. Die Winkel α und β können unterschiedlich sein, in Fig 2 beträgt der Winkel α ca. 50° der Winkel β 40°. Je nach Ausgestaltung der Lösung kann die insoweit gebildeten Hinterschneidungswinkel a und β Werte zwischen 25° bis 60°, bevorzugt zwischen 30° bis 50°, und besonders bevorzugt zwischen 40° bis 50° einnehmen, wie für die gezeigten Ausführungsbeispiele. Die Hinterschneidung in Form des Ringraums 40 braucht die Trennstelle 20 nicht vollständig zu umgeben, es genügt, wenn die Trennstelle 20 teilweise vom Ringraum 40 umfasst ist. Trennt man das kappenartige Verschlussteil 18 mittels einer Handhabe 46 vom Halsteil 14 entlang der Trennstelle 20 ab, kommt man bei der Ausführungsform nach den Fig. 1 und 2 zu einem geöffneten Behälter gemäß der Darstellung nach der Fig. 3. Aus dieser ergibt sich, dass das Halsteil 14 unter Bildung einer stirnseitigen Mündungsebene M entlang der freigegebenen Behältermündung 22 in Richtung des nunmehr abgetrennten Verschlussteils 18 vorsteht, und dass die in der geöffneten Stellung freigegebene Trennstelle 20 in einer Trennebene T verläuft, die gegenüber der Mündungsebene M in Richtung des Behälterkörpers 10 zurückversetzt ist. Sowohl Mündungsebene M als auch Trennebene T sind fiktive Ebenen, wie sie sich ergeben, wenn sie durch die freigegebene Behältermündung 22 bzw. entlang der ringförmigen Trennstelle 20 hindurchgehen.

Wie ebenfalls Fig. 3 weiter verdeutlicht, ist der freigegebene Rand in Form des Kunststoff-Wandteils 24 in der geöffneten Stellung des Behälters einwärts gebogen und begrenzt den freien Behälteröffnungsquerschnitt im Bereich der vorspringenden Umwölbung. Unabhängig, wie die Bruchstelle am freigegebenen Rand des Wandteils 24 aussieht, ist jedenfalls entlang der Mündungsebene M ein glatter Anlagerand 48 gebildet, der sicherstellt, dass eine Applikation ohne Verletzungsgefahr erfolgen kann.

Bei den in den Figuren gezeigten Ausführungsbeispielen des Behälters sind die gezeigten freizugebenden Querschnitte des Behälters im Wesentlichen kreisförmig. Es besteht aber auch die Möglichkeit, die Trennstelle 20 und letztendlich auch die Hinterschneidung in Form des Ringraums 40 nicht kreisringförmig, sondern in bevorzugter Weise auch oval oder ellipsenförmig (nicht dargestellt) auszubilden. In jedem Fall sollte aber darauf geachtet werden, dass die Öffnungsquerschnittsfläche für die Behälteröffnung 22, die beim Abtrennen des Verschlussteils 18 vom sonstigen Ampullen- oder Behälterkörper 10 freigegeben wird, weniger als 80 mm², bevorzugt weniger als 25 mm², besonders bevorzugt weniger als 15 mm² beträgt.

Bei dem Ausführungsbeispiel nach den Fig. 1, 2a und 3 bildet die konisch umlaufende Wand 38 im Verschlussteil 18 eine umlaufende Schrägführung aus, so dass etwaig in der Hohlkammer 26 vorhandene Füllgut 12 von sich aus bei geschlossenem und aufgestelltem Behälter in vertikaler Richtung zurückströmen kann. Hierfür ist bei der beschriebenen Lösung der erste Kegelstumpf 44 oberhalb der Trennstelle 20 mit der Trennebene T angeordnet. Dabei schließt der Kegelstumpf 44 in einem bogenförmigen Übergangsbereich an die in den Figuren horizontal dargestellte Abschlusswand 30 der schalenartigen Hohlkammer 26 an. Wie sich weiter aus den Fig. 1, 2a und 3 ergibt, erfolgt an der Wandteilschwächung im Bereich der Trennstelle 20 eine weitere bogenförmige Umlenkung, ausgehend von dem Kegelstumpf 44 zum weiteren Kegelstumpf 42, der an das Halsteil 14 nach oben hin anschließt, wobei der Kegelstumpf 44 über den bogenförmigen Anlagerand 48 in den kreiszylindrischen Stutzen des Halsteils 14 übergeht.

Das Ausführungsbeispiel gemäß Fig. 2b ist ähnlich Fig. 2a, weist jedoch einen stufig geformten, von der Trennstelle 20 begrenzen Ringraum 40a auf. Dieser wird zum einen durch die konische Wand 36 des Behälterhalses 14 gebildet, deren fiktive Verlängerung einen Hinterschneidungswinkel a von ca. 45° zu Längsachse 32 einnimmt, und zum anderen durch die zylindrische, parallel zur Längsachse 32 orientierte Teilwand 38a und die sich daran abgewinkelt anschließende Teilwand 39 des Kopfteils 16.

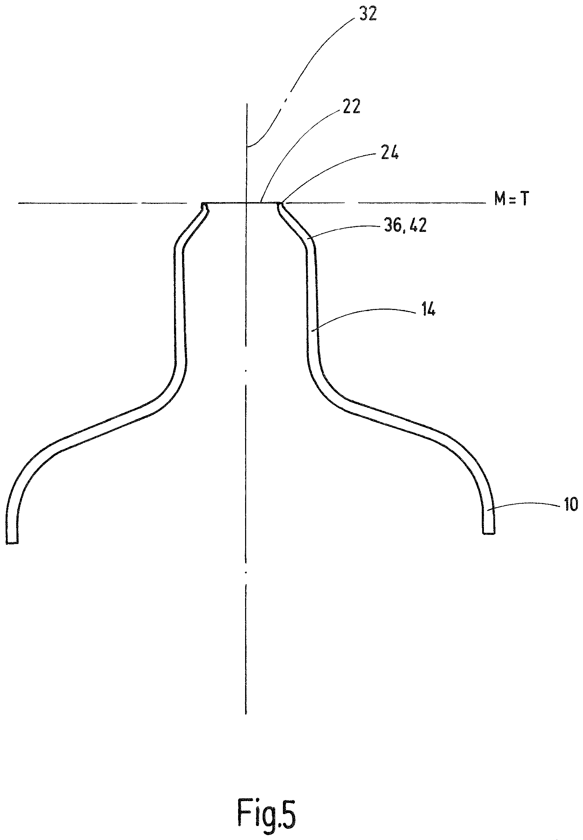

Die in den Fig. 4 und 5 gezeigte geänderte Ausführungsform wird nur noch insofern erläutert, als sie sich wesentlich von der vorangehenden Ausführungsform unterscheidet. So verdeutlicht die Fig. 4, dass der von den Kegelstümpfen 42, 44 begrenzte Ringraum 40 sich mit seiner konischen Neigung nunmehr in Richtung des Verschlussteils 18 orientiert, wohingegen bei der erstgenannten Ausführungsform die konische Orientierung des Ringraums 40 in Richtung des Behälterkörpers 10 weist. Dies führt unter anderem dazu, dass, wie die Darstellung nach der Fig. 5 zeigt, bei abgetrenntem Verschlussteil entlang der Trennstelle 20 die Mündungsebene M mit der Trennebene T in eine gemeinsame Ebene fällt. Insoweit sind auch beide Kegelstümpfe 42, 44 mit ihrer konischen Ausrichtung und den gebildeten Hinterschneidungswinkeln a und β zum Verschlussteil 18 hin orientiert. In dieser Ausführungsform ist der Winkel β stets größer oder gleich dem Winkel α.

Wie die Fig. 4 weiter zeigt, grenzt die schalenförmige Hohlkammer 26 nunmehr mit gerade verlaufenden Begrenzungswänden in zylindrischer Form an den Kegelstumpf 44 an und erst unterhalb der Trennstelle 20, in Blickrichtung auf die Fig. 4 gesehen, ist der weitere Kegelstumpf 42 des Behälterkörpers 10 vorhanden, der einen Rückfluss von Fluid aus der Hohlkammer 26 in Richtung des Behälterinneren, auch bei geöffnetem Behälter, unterstützt.

Bei beiden Ausführungsbeispielen ist erreicht, dass für die Herstellung der jeweiligen Hinterschneidung respektive des konischen Ringraums 40 es zu einem längeren Verstreckweg des Materials des Behälters kommt mit lokaler Ausdünnung an der Sollbruchstelle in Form der Trennstelle 20, was eine konzentrierte Krafteinleitung unterstützt, so dass dergestalt mit geringer Brucharbeit, d.h. mit geringen Drehmomenten an der Handhabe 46 sich der jeweilige Behälter öffnen lässt. Dies hat so keine Entsprechung im Stand der Technik.

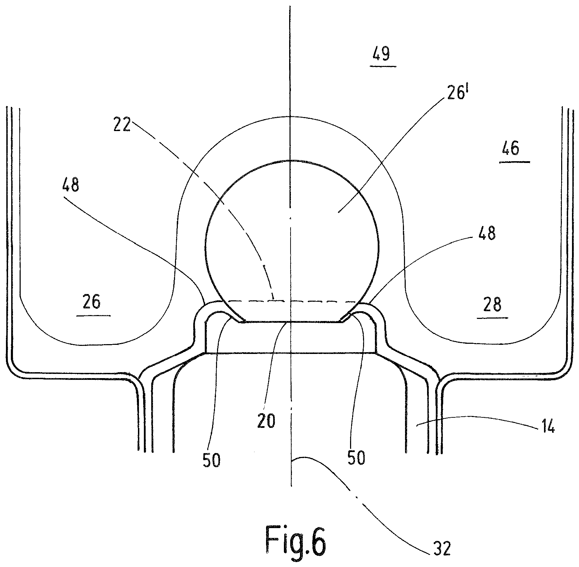

In der Fig. 6 ist eine Hälfte einer Herstellform offenbart, mit der sich die Hinterschneidung nach den Fig. 1 und 2 herstellen lässt mit der Maßgabe, dass anstelle des schalenförmigen flachen Hohlkörpers 26 ein kugelförmiger Hohlkörper 26' als Verschlussteil realisiert ist. Durch einen zur Längsache 32 geneigte vorstehenden stegartigen Formgrat 50, der Teil einer geneigten, geschlossenen Formringfläche ist, wird die konische Hinterschneidung respektive der Ringraum 40 erstellt und der Behälterkörper als Ganzes ist dann mit seinem Kopfteil 16 und der Handhabe 46 aus der Formvorrichtung zu entfernen, wobei die Formvorrichtung zweigeteilt ist und die korrespondierende zweite Kopfform ist senkrecht zur Zeichenebene der Fig. 6 auf die gezeigte eine Kopfform für einen Formvorgang aufsetzbar und für einen Entformungsvorgang abnehmbar. Die in Fig. 6 eingezeichneten Bezugszeichen stehen der Einfachheit halber für die herzustellenden Kunststoffteile bei dem Behältererzeugnis nach den Fig. 1 bis 3, die insoweit nicht Bestandteile der Herstellform sind.

Die in Fig. 6 teilweise dargestellte Herstellform für einen Behälter gemäß der Darstellung nach den Fig. 1 bis 3 lässt sich für ein Blasform-, Füll- und Schließverfahren auch mit vorgenannten amorphen, thermoplastischen Materialien einsetzen, wobei hier die Besonderheit besteht, dass man mit Hilfe von Unterdruck, den man an das Innere der Formvorrichtung anlegt, den gezeigten Behälter auch ohne eigentlichen Blasformvorgang erstellen kann.

Zur weiteren Erläuterung werden nachfolgend noch einige Ausführungsbeispiele (Versuchsnummern 1-18) wiedergegeben.

Aus 8 verschiedenen Materialien wurden Ampullen mit unterschiedlichen Öffnungsquerschnittsflächen ohne Hinterschneidung, wie sie im Stand der Technik üblich sind, und solche mit erfindungsgemäßer Hinterschneidung respektive konischem Ringraum 40 gemäß den Fig. 1 und 2a mit unterschiedlichen Hinterschneidungswinkeln α und β hergestellt. Der Winkel β war stets etwa 10°-15° geringer als der Winkel α. Hierzu wurde eine BFS-Anlage der Firma Rommelag vom Typ Bottelpack bp312M mit 4-fach-Formen verwendet; zum Einsatz kamen dabei folgende Polymere: PEF, PET, PET-Copolyester, PETG und ein weiterer Copolyester (S2008, Fa. SK Chemicals). Ferner COP- und COC-Polymere. Die Öffnungsdrehmomente der Ampullen wurden mit dem Drehmomentmessgerät Vortex-i der Firma Mecmesin bei einer Drehgeschwindigkeit von 10/min gemessen. Details zur Polymervorbereitung, Extrusionsbedingungen und Ampullenherstellung und die Ergebnisse - Verhältnis der Öffnungsdrehmomente mit und ohne Hinterschneidung bei gleicher Öffnungsquerschnittsfläche - sind in der nachfolgenden Tabelle dargestellt. Die Ergebnisse (Durchschnittswerte aus je 4 Ampullen) der erfindungsgemäßen Lösung zeigen eine deutliche Reduktion der Öffnungsdrehmomente von 88 % (Versuchsnr. 1) auf bis zu 69 % (Versuchsnr. 18) jeweils gegenüber der ansonsten gleich ausgestalteten Referenzampulle mit gleicher Öffnungsfläche.

| Versuchs Nr | Fläche Öffnung | Ampulle | Winkel Alpha | Polymer Klasse | Polymer Type | Polymer Hersteller | Trocknuna | Masse Druck | Masse-Temperatu r | Öffnungsdrehmoment Ampulle/ Referenzampulle |
|---|---|---|---|---|---|---|---|---|---|---|
| | mm² | gemäß Fig. | grad | | | | | bar | °C | |
| 1 | 12 | 2 | 45 | PET-Copolyester | MX810 | Eastman | 6h bei 67°C | 260 | 205 | 88% |
| 2 | 12 | 2 | 55 | PETG | MB002 | Eastman | 12h bei 60°C | 240 | 210 | 87% |
| 3 | 12 | 3 | 55 | PBT | Pocan 81501 | Lanxess | 6h bei 125°C | 250 | 260 | 85% |
| 4 | 12 | 3 | 45 | PETG | S2008 | SK Chemicals | 6h bei 55°C | 220 | 200 | 83% |
| 5 | 12 | 3 | 50 | PETG | S2008 | SK Chemicals | 6h bei 55°C | 220 | 190 | 83% |
| 6 | 20 | 2 | 50 | PET | Traytuf 9506 | M&G Chemicals | 10h bei 120°C | 260 | 250 | 82% |
| 7 | 12 | 2 | 45 | PET-Copolyester | Polyclear 5505 | Invista | 10h bei 120°C | 280 | 251 | 79% |
| 8 | 12 | 2 | 40 | PET | Traytuf 9506 | M&G Chemicals | 10h bei 120°C | 260 | 250 | 78% |
| 9 | 12 | 2 | 40 | PETG | MB002 | Eastman | 12h bei 60°C | 240 | 210 | 77% |
| 10 | 12 | 2 | 45 | PETG | MB002 | Eastman | 12h bei 60°C | 240 | 210 | 77% |
| 11 | 12 | 3 | 45 | PET | Traytuf 9506 | M&G Chemicals | 10h bei 120°C | 260 | 250 | 75% |
| 12 | 12 | 2 | 40 | PEF | PEF | Avantium | 18h bei 150°C | 255 | 255 | 73% |
| 13 | 7 | 2 | 45 | COC | Topas 8007S | Topas | 6h bei 50°C | | | 72% |
| 14 | 7 | 2 | 45 | COP | Zeonex 5000 | Zeon | 6h bei 50°C | | | 72% |
| 15 | 20 | 2 | 40 | PEF | PEF | Avantium | 18h bei 150°C | 255 | 255 | 71% |
| 16 | 12 | 2 | 45 | PET | Traytuf 9506 | M&G Chemicals | 10h bei 120°C | 260 | 250 | 70% |
| 17 | 12 | 3 | 35 | PET | Traytuf 9506 | M&G Chemicals | 10h bei 120°C | 260 | 250 | 70% |
| 18 | 25 | 2 | 45 | PEF | PEF | Avantium | 18h bei 150°C | 255 | 255 | 69% |

## Patentansprüche

1. Behälter, insbesondere in Ampullenform, sowie ganz oder überwiegend aus einem oder mehreren Kunststoffmaterialien bestehend, mit einem Behälterkörper (10) zur Aufnahme eines Füllguts (12), das über eine freigebbare Behältermündung (22) nach Entfernen eines Verschlussteils (18) entnehmbar ist, das entlang einer Trennstelle (20) mit einem Halsteil (14) des Behälterkörpers (10) in einer ungeöffneten Stellung lösbar verbunden ist, wobei sich in der ungeöffneten Stellung an die Trennstelle (20) eine konisch verlaufende Wand (36) vom Halsteil (14) am Behälterkörper (10) und eine konisch verlaufende Wand (38) vom Verschlussteil (18) anschließen, und diese Wände (36, 38) zumindest einen Teil eines Ringraumes (40) begrenzen, der an seinem einen Ende in die Umgebung und an seinem anderen Ende in die Trennstelle (20) ausmündet, wobei die konische Wand (36) vom Halsteil (14) und die Wand (38) vom Verschlussteil (18) in der Art von Kegelstümpfen (42, 44) ausgebildet sind, **dadurch gekennzeichnet, dass** die konischen Wände (36, 38) ineinandergestellt den Ringraum (40) begrenzen.

2. Behälter nach Anspruch 1 oder 2, **dadurch gekennzeichnet, dass** der Ringraum (40) sich in Richtung des Behälterkörpers (10) oder in Richtung des Verschlussteils (18) orientiert.

3. Behälter nach einem der vorstehenden Ansprüche, **dadurch gekennzeichnet, dass** mindestens eine fiktive Verlängerung der Wände (36, 38) des Ringraums (40) mit der Längsachse (32) des Behälters einen Winkel (a) einschließt, der 25°-60°, bevorzugt 30°-50° besonders bevorzugt 40°-50° beträgt.

4. Behälter nach einem der vorstehenden Ansprüche, **dadurch gekennzeichnet, dass** der Behälterkörper (10) das Halsteil (14) aufweist, das die freigebbare Behältermündung (22) umfasst und das mit dem Verschlussteil (18) zusammen die Trennstelle (20) bildet.

5. Behälter nach einem der vorstehenden Ansprüche, **dadurch gekennzeichnet, dass** die Trennstelle (20) aus einem geschwächten Wandteilbereich zwischen dem Halsteil (14) und dem Verschlussteil (18) gebildet ist, und dass das Verschlussteil (18) mittels einer Handhabe (46) vom Halsteil (14) entlang der Trennstelle (20) entfernbar ist.

6. Behälter nach einem der vorstehenden Ansprüche, **dadurch gekennzeichnet, dass** eine Ebene M, in der die Behältermündung (22) liegt, in Richtung des Verschlussteils (18) gegenüber einer Trennebene (T), in der die Trennstelle (20) liegt, vorsteht.

7. Behälter nach einem der vorstehenden Ansprüche, **dadurch gekennzeichnet, dass** ein freigegebener Rand (24) des Halsteils (14) in der geöffneten Stellung einwärts gebogen ist.

8. Behälter nach einem der vorstehenden Ansprüche, **dadurch gekennzeichnet, dass** er zumindest teilweise aus einem amorphen Polyolefin besteht, bevorzugt einen Cycloolefinpolymer und/oder einem Cycloolefincopolymer mit einer Glasübergangstemperatur von weniger als 150 °C, bevorzugt von weniger als 110 °C und/oder deren Blends.

9. Behälter nach einem der vorstehenden Ansprüche, **dadurch gekennzeichnet, dass** er als Trinkampulle, vorzugsweise für die Aufnahme eines Stärkungsmittels konzipiert ist, und dass der Kunststoff zur Herstellung einen aromatischen Polyester, bevorzugt Polyethylenterephthalat (PET) oder besonders bevorzugt Polyethylenfuranoat (PEF) enthält.

10. Vorrichtung zum Herstellen eines Behälters nach einem der vorstehenden Ansprüche, **dadurch gekennzeichnet, dass** zumindest zwei gegeneinander bewegbare Kopfformen (49) vorgesehen sind, die den Ringraum (40) erzeugen und deren Formteile (50) aus dem Ringraum (40) zwecks Freigabe des Behälters aus der Form zwangsentformt werden.

11. Verfahren zum Herstellen eines Behälters nach einem der Ansprüche 1 bis 10 unter Verwendung einer Vorrichtung nach Anspruch 11, **dadurch gekennzeichnet, dass** der Behälterkörper (10) mit Hilfe von Unterdruck ohne eigentlichen Blasformvorgang ausgeformt wird.

## Claims

1. Container, in particular in ampoule form, and consisting wholly or predominantly of one or more plastic materials, having a container body (10) for holding a filling material (12) which can be withdrawn via a releasable container mouth (22) after removal of a closure part (18) which, along a separation point (20), is detachably connected to a neck part (14) of the container body (10) in an unopened position, wherein, in the unopened position, a conically extending wall (36) of the neck part (14) on the container body (10) and a conically extending wall (38) of the closure part (18) adjoin the separation point (20), and these walls (36, 38) define at least part of an annular space (40) which opens out at its one end into the environment and at its other end into the separation point (20),
wherein the conical wall (36) of the neck part (14) and the wall (38) of the closure part (18) are configured in the manner of truncated cones (42, 44), **characterised in that** the conical walls (36, 38), placed one inside the other, define the annular space (40).

2. Container according to claim 1 or 2, **characterised in that** the annular space (40) is oriented towards the container body (10) or towards the closure part (18).

3. Container according to one of the preceding claims, **characterised in that** at least one notional extension of the walls (36, 38) of the annular space (40) encloses with the longitudinal axis (32) of the container an angle (α) which is 25°-60°, preferably 30°-50° particularly preferably 40°-50°.

4. Container according to one of the preceding claims, **characterised in that** the container body (10) has the neck part (14) which encompasses the releasable container mouth (22) and which together with the closure part (18) forms the separation point (20).

5. Container according to one of the preceding claims, **characterised in that** the separation point (20) is formed of a weakened wall portion between the neck part (14) and the closure part (18), and **in that** the closure part (18) is removable from the neck part (14) along the separation point (20) by means of a tab (46).

6. Container according to one of the preceding claims, **characterised in that** a plane M, in which the container mouth (22) is located, protrudes towards the closure part (18) with respect to a separation plane (T), in which the separation point (20) is located.

7. Container according to one of the preceding claims, **characterised in that** a released edge (24) of the neck part (14) is bent inwards in the opened position.

8. Container according to one of the preceding claims, **characterised in that** it consists at least in part of an amorphous polyolefin, preferably a cyclic olefin polymer and/or a cyclic olefin copolymer having a glass transition temperature of less than 150 °C, preferably of less than 110 °C, and/or blends thereof.

9. Container according to one of the preceding claims, **characterised in that** it is designed as a drinking ampoule, preferably for holding a tonic, and **in that** the plastic for its production contains an aromatic polyester, preferably polyethylene terephthalate (PET) or particularly preferably polyethylene furanoate (PEF).

10. Device for producing a container according to one of the preceding claims, **characterised in that** at least two head moulds (49), which are movable relative to each other, are provided, which create the annular space (40) and the moulded components (50) of which are forcibly demoulded from the annular space (40) for the purpose of releasing the container from the mould.

11. Method for producing a container according to one of claims 1 to 10 using a device according to claim 11, **characterised in that** the container body (10) is formed with the aid of negative pressure without an actual blow moulding process.

## Revendications

1. Récipient, en particulier en forme d'ampoule, ainsi que constitué en tout ou d'une manière prépondérante d'une ou de plusieurs matières plastiques, comprenant un corps (10) de récipient, pour la réception d'un produit (12) de remplissage, qui peut, par une embouchure (22) du récipient pouvant être dégagée, être prélevé après retrait d'une partie (18) de fermeture, qui est reliée de manière amovible dans une position non ouverte le long d'un emplacement (20) de séparation à une partie (14) de col du corps (10) du récipient, dans lequel, dans la position, qui n'est pas ouverte, se raccorde, à l'emplacement (20) de séparation, une paroi (36), s'étendant coniquement, de la partie (14) de col du corps (10) du récipient et une paroi (38), s'étendant coniquement, de la partie (18) de fermeture et ces parois (36, 38) délimitent au moins une partie d'un espace (40) annulaire, qui débouche à l'une de ses extrémités dans l'environnement et, à son autre extrémité, dans l'emplacement (20) de séparation,
dans lequel
la paroi (36) conique est constituée par la partie (14) de col et la paroi (38) par la partie (18) de fermeture à la manière de troncs de cône (42, 44), **caractérisé en ce que** les parois (36, 38) coniques délimitent, l'une mise dans l'autre, l'espace (40) annulaire.

2. Récipient suivant la revendication 1 ou 2, **caractérisé en ce que** l'espace (40) annulaire s'oriente dans la direction du corps (10) du récipient dans la direction de la partie (18) de fermeture.

3. Récipient suivant l'une des revendications précédentes, **caractérisé en ce qu'**au moins un prolongement fictif des parois (36, 38) de l'espace (40) annulaire fait, avec l'axe (32) longitudinal du récipient, un angle (α) de 25° à 60°, de préférence de 30° à 50°, d'une manière particulièrement préférée de 40° à 50°.

4. Récipient suivant l'une des revendications précédentes, **caractérisé en ce que** le corps (10) du récipient a la partie (14) de col, qui comprend l'embouchure (22) du récipient pouvant être dégagée et qui forme ensemble avec la partie (18) de fermeture l'emplacement (20) de séparation.

5. Récipient suivant l'une des revendications précédentes, **caractérisé en ce que** l'emplacement (20) de séparation est formé d'une zone de partie de paroi affaiblie entre la partie (14) de col et la partie (18) de fermeture, et **en ce que** la partie (18) de fermeture peut, au moyen d'une prise (46), être retirée de la partie (14) de col le long de l'emplacement (20) de séparation.

6. Récipient suivant l'une des revendications précédentes, **caractérisé en ce qu'**un plan M, dans lequel se trouve l'embouchure (22) du récipient, fait saillie en direction de la partie (18) de fermeture, par rapport à un plan (T) de séparation, dans lequel se trouve l'emplacement (20) de séparation.

7. Récipient suivant l'une des revendications précédentes, **caractérisé en ce qu'**un bord (24) dégagé de la partie (14) de col est coudé vers l'intérieur dans la position ouverte.

8. Récipient suivant l'une des revendications précédentes, **caractérisé en ce qu'**il est constitué au moins en partie en une polyoléfine amorphe, de préférence en un polymère de cyclo-oléfine et/ou en un copolymère de cyclo-oléfine ayant une température de transition à l'état vitreux plus basse que 150°C, de préférence plus basse que 110°C et/ou en leurs mélanges.

9. Récipient suivant l'une des revendications précédentes, **caractérisé en ce qu'**il est conçu en ampoule buvable, de préférence pour la réception d'un tonique, et **en ce que** la matière plastique contient, pour la production d'un polyester aromatique, de préférence du poly(téréphtalate d'éthylène) (PET) ou, d'une manière particulièrement préférée du poly(furanoate d'éthylène) (PEF).

10. Installation de fabrication d'un récipient suivant l'une des revendications précédentes, **caractérisé en ce qu'**il est prévu au moins deux moules (49) de tête mobiles l'un par rapport à l'autre, qui produisent l'espace (40) annulaire et dont on démoule de manière forcée des parties (50) de l'espace (40) annulaire en vue de dégager le récipient du moule.

11. Procédé de fabrication d'un récipient suivant l'une des revendications 1 à 10, en utilisant une installation suivant la revendication 11, **caractérisé en ce que** l'on démoule le corps (10) du récipient à l'aide d'une dépression, sans opération de moulage par soufflage proprement dite.
